(19) **Europäisches Patentamt**
**European Patent Office**
**Office européen des brevets**

(11) **EP 2 476 239 B1**

(12) **EUROPEAN PATENT SPECIFICATION**

(45) Date of publication and mention
of the grant of the patent:
**07.11.2018 Bulletin 2018/45**

(21) Application number: **09782824.8**

(22) Date of filing: **09.09.2009**

(51) Int Cl.:
***H04L 29/08*** *(2006.01)*

(86) International application number:
**PCT/EP2009/061698**

(87) International publication number:
**WO 2011/029470 (17.03.2011 Gazette 2011/11)**

(54) **ADAPTATION OF CONTENT TRANSMISSION IN MOBILE NETWORKS**

ADAPTION VON INHALTSÜBERTRAGUNG IN MOBILFUNKNETZEN

ADAPTATION DE TRANSMISSION DE CONTENU DANS DES RÉSEAUX MOBILES

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**18.07.2012 Bulletin 2012/29**

(73) Proprietor: **Telefonaktiebolaget LM Ericsson
(publ)
164 83 Stockholm (SE)**

(72) Inventors:
• **ALUND, Stefan
12246 Enskede (SE)**

• **WILLIG, Johannes
52134 Herzogenrath (DE)**

(74) Representative: **Brann AB
P.O. Box 3690
Drottninggatan 27
103 59 Stockholm (SE)**

(56) References cited:
**EP-A1- 1 486 897        EP-A1- 1 853 044
EP-A2- 1 021 021        US-A1- 2002 082 912
US-A1- 2005 041 652     US-A1- 2007 079 353
US-B1- 6 557 026**

**Description**

Technical Field

This invention relates to a method for adapting a transmission mode for transmitting a content to a client, to a network node adapting the transmission mode, to a method for adapting a transmission mode for a content transmitted from a content server and to the client adapting the transmission mode for the content received from the content server.

Technical Background

Mobile applications that are offering instant access to multimedia data and information are causing remarkable rates of growth for data volumes in mobile networks. Most of the traffic-generating applications request new content or updates by polling a source.

For delivery of time-critical content, a push delivery scheme may be established. Push delivery mechanisms normally rely on "hanging" persistent connections that are established between a server (content source) and a client (receiver). Since the connection is always open the server can push new content to the client when needed. In the mobile domain, SMS messages can be used to deliver push notifications. SMS push notifications are superior to persistent connections since no network resources needs to be established and the client application does not need to be running.

Most users are already used to receive pushed information on their mobile phones, in the form of normal SMS messages. In contrast to normal usage of SMS, where the message lands in the built in SMS application, a push SMS is targeted to a push-enabled application installed on the phone. The incoming push SMS triggers the application to start up, hence, there is no need for the application to be running in the background.

This saves scarce resources on a mobile terminal, such as battery and processing power. Normally the body of the push SMS does not carry the actual content, but rather a link to the source from where the content can be downloaded. This can be described as a push-to-poll model where the SMS notifies the application that new data are available. For such a process a service provider needs to assure that the content which should be delivered is accessible on the content server. In another step the content provider needs to initiate the push delivery at the push/SMS gateway from where the push trigger is delivered to the client where an application can be started for downloading the content.

As mentioned before, the SMS trigger delivery is only one way to transmit the push trigger to mobile devices. Most of the existing solutions replace the SMS with trigger delivery using convenient HTTP, TCP or UDP connections. The connections are modified e.g. via keep-alive beacons and automatic client requests to provide the possibility of a server initiated push. However, this approach still requires a considerable amount of network resources and data volume for the management of the push connection compared to SMS.

Frequent polling behavior causes resource waste. This is especially true in mobile networks, where radio network resources need to be allocated each time, even for transmitting very small packets. Very often, these small packets are transmitted with the purpose to request availability of new content or to keep a "hanging" connection open. These polling requests are, in most cases a waste, since no new content is available or nothing has changed for the connection. This causes, on one side, a waste of radio resources, but also a drain of battery power of the device. The inefficiency of frequent polling schemes is further emphasized when the content that is polled updates rarely. SMS-based push delivery can be used to provide a more resource-efficient delivery scheme. The SMS-based scheme is however associated with an extra charge that is not neglectable, thus preventing it from being used without additional considerations. Depending on the intervals between new content availability at the source it may be more efficient to select a specific push mechanism. Using one static push mechanism for each content source is not appreciated, since the update behavior may vary over time.

EP 1 853 044 A1 discloses a content delivery system in which applications and content providers may be added without changing the architecture. A network status monitor is provided monitoring the status of the network. If a client is connected to a WIFI network, extra data may be pushed to the client.

Document US2005/041652 discloses an adaptive polling engine for polling the content on different rate to a mobile device.

Document US6557026 describes an adaptive scheduler which reduces the polling rate as the rate of arrival of new stories decreases.

Summary

Accordingly, a need exists to provide a mechanism that allows an improved transmission of the content provided on the content server to the client.
This need is met by the features of the independent claims. In the dependent claims preferred embodiments of the invention are described. The invention is carried out according to the appended independent claims. Optional features of the invention are carried out according to the dependent claims.

According to a first aspect a method for adapting a transmission mode for transmitting a content to the client is provided, wherein in one step of the method at least one parameter related to content transmission is monitored. Additionally, a transmission mode adaptation is automatically determined based on said at least one monitored parameter related to content transmission. In another step the client is instructed how to adapt the transmission mode based on the determined transmission mode adaptation. In the claimed invention a network node, by which the above-described method may be carried out, can monitor said at least one parameter related to content transmission, a message being generated for the client including instructions how the transmission mode of the content from the content server to the client should be adapted in view of the monitored parameter related to content transmission. With the presently claimed invention it is possible to reduce network usage in a cost-effective manner.

According to a preferred embodiment of the invention the transmission mode is a push mode or a poll mode. In the push mode the content is pushed to the client when the content is available on the server or the SMS push notifications are pushed to the client. In the poll mode the client asks the content server whether new content is available without being notified as it is the case of SMS push notification. A polling frequency describes how often the client asks for a new content.

In one example of the invention the transmission mode is adapted at the server based on said at least one parameter related to content transmission. Preferably, the server is the server on which the content is provided. However, it is also possible that the content is provided elsewhere.

The step of determining a transmission mode adaptation may comprise the step of initiating a change from one transmission mode to the other transmission mode based on said at least one parameter. For the above-referenced push mode or poll mode this means that based on the monitored parameter the transmission mode is adapted from a push mode to a poll mode or from a poll mode to a push mode.

The basis for the decision whether the transmission mode is adapted and how it is adapted can be one of the following parameters related to content transmission: In one embodiment of the invention the step of monitoring said at least one parameter related to content transmission comprises the step of monitoring a client's polling behavior of retrieving the content from the content server. The transmission mode adaptation is then determined taking into account the monitored client's polling behavior. By way of example negative polling attempts from the client can influence the transmission mode adaptation.

In another example the network load of the network via which the content is transmitted to the client may play a role for deciding how the content is transmitted to the client. In this example the step of monitoring said at least one parameter related to content transmission comprises the step of considering a network load parameter representing a network load of the network via which the content is transmitted to the client. The transmission mode adaptation is then determined taking into account the network load parameter. The network load parameter can be either monitored or set via an external interface.

Furthermore, said parameter related to content transmission may reflect the number of negative polling events from the client that can be monitored, the transmission mode adaptation containing the step of adjusting the polling frequency of the client.

If the number of negative polling events becomes too high, the polling frequency may be lowered. In the case of no negative polling events the polling frequency may be increased.

Another parameter on which the transmission mode adaptation may be based can be the network costs for transmitting the content to the client. Here the step of monitoring said at least one parameter related to content transmission comprises the step of determining network costs for transmitting the content to the client using a poll mechanism and the costs for transmitting the content to the client using the push mechanism. For deciding which transfer mechanism is used, the cost of the push mode can be compared to the costs of the poll mode, the transmission mode being selected based on the comparison of the involved costs. Preferably, the transmission mode will be adapted in such a way that the transmission mode is used for which the costs are lower.

Another parameter that may influence the transmission mode adaptation can be the network load as described above. In this context it can be determined whether the network load is lower than a predetermined threshold. If this is the case, the transmission mode adaptation may contain the step of selecting for the client a poll mode for content transmission. If the network load is low, the additional load originating from the different polling events do not play an important role, so that the poll mode is selected for content transmission. If, however, the network load is higher than the predetermined threshold, it may be preferred to adapt the transmission mode in such a way that a push mode is selected for content transmission. In the push mode no additional network load is generated by the client for negative polling attempts.

The transmission mode adaptation will be determined depending on one or several of the above-mentioned parameters related to content transmission. The different parameters may be prioritized indicating that the decision how the transmission mode is adapted mainly depends on some more important parameters related to content transmission, e.g. the polling frequency, whereas other parameters, e.g. the network load or the costs have less influence on the transmission mode adaptation. The content provider or network operator can weight the different parameters in accordance with his needs.

The invention furthermore relates to the network node adapting the transmission mode for transmitting the content to the client, the network node comprising a monitoring unit monitoring said at least one parameter related to content transmission. The network node further comprises a transmission mode adaptation unit determining the transmission mode adaptation based on the monitored parameter related to content transmission, the transmission mode adaptation unit further instructing the client how to adapt the transmission mode based on the determined transmission mode adaptation. The adaptation unit may generate the message for the client including the instructions how to automatically adapt the transmission mode for the content. The instructions can contain the information to either change from one transfer mechanism to the other or to adapt a polling frequency.

The network node may furthermore comprise an interface allowing to determine information about a network load of the network via which the content is transmitted to the client. As described above, the network load may play a role for deciding how the transmission mode should be adapted. Furthermore, a database may be provided containing information about the content publication rate, and/ or information about negative polling attempts by the client, etc.

Additionally, an interface may be provided allowing to determine the costs occurring when the content is transmitted to the client using the push or the poll mode. The information about the network load and the costs may be provided by one interface; however it is also possible that the needed information is provided by different interfaces.

According to another example of the invention, a method for adapting the transmission mode of the content at the client is provided containing the step of subscribing to content provided on the content server. The method furthermore comprises the step of receiving the message containing instructions how to adapt a transmission mode related to content transmission. In an additional step the transmission mode is then adapted at the client based on the received instructions contained in the message. Furthermore, the invention relates to the client adapting the transmission mode containing the receiver for receiving the message and containing an adaptation unit configured to automatically adapt the transmission mode based on the received instructions.

Brief Description of the Drawings

The invention and further objectives and advantages thereof will best be understood by reference to the following detailed description of preferred embodiments when read in conjunction with the accompanying drawings, in which

Fig. 1 shows a schematic view of a system in which a client receives content from a content server via a network node in which a parameter related to content transmission is monitored,

Fig. 2 shows a flowchart containing the main steps needed for adapting the transmission mode as seen from the network node,

Fig. 3 is a sequence showing the interaction between the content server and the client where the client is instructed to finally change to a push mode,

Fig. 4 shows a flowchart containing the steps in which a client requires updates from a RSS source, and

Fig. 5 shows an example of a preferred delivery mode in dependence on the network usage.

Detailed Description

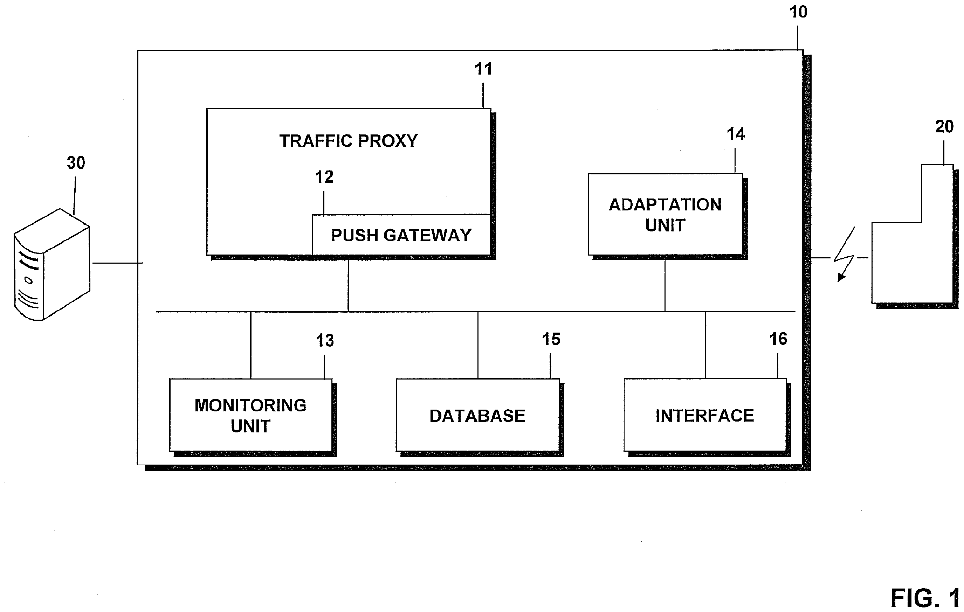

In Fig. 1 a network node 10 is shown which can monitor different parameters related to content transmission and which can instruct a client 20 how a transmission mode for a content provided on a server 30 should be adapted. The network node can be a separate node or collocated in an existing network node, e.g. the GGSN (gateway GPRS support node). The client 20, or its user, has subscribed to a content provided on the server 30. The content may contain any kind of information or data, e.g. news or multimedia files, etc. The network node 10 contains a traffic proxy acting as an intermediary for requests from the client 20 to the server 30. The traffic proxy 11 contains a push gateway 12 allowing to transfer the content using a push mechanism in which the client is informed when new content is provided on the server, e.g. by sending a push notification via a SMS application. The network node furthermore comprises a monitoring unit 13 in which a parameter related to content transmission is monitored. The monitoring unit may inter alia monitor the content publication rate at the content source/ server 30, negative polling attempts from the client and/or the current network load to determine the cost or the effectiveness of one of the ways for delivery. The content may either be delivered using the push mechanism as described above or the poll mechanism in which the client asks whether new content is available at the content server 30. An adaptation unit 14 determines the transmission mode adaptation based on the information received from the monitoring unit. The adaptation unit generates a message for the client including instructions how to adapt the transfer mechanism if an adaptation is required. Depending on the currently selected transfer mechanism the adaptation may contain the instructions to adjust the polling frequency of the client or to switch to push delivery, e.g. SMS push delivery, and to stop polling altogether if the currently used transfer mechanism is the polling mode. If the client is currently using the polling mechanism, it is also possible that the client is instructed only to adapt the polling frequency. If the client is instructed to change to the push mode, the client now relies on the server to push content whenever new information is available or until it is again more efficient to poll for updates and it received the information from the network node to poll again with a certain frequency.

A database 15 is provided which may contain information such as information about a content publication rate of the content provided on the server 30. Additionally, the database may contain the information about negative polling attempts by the client. The adaptation unit may access the database in order to decide how to adapt the transmission mode. If the content publication follows a certain time scheme, this time scheme may be stored in the database 15. By way of example if no new content is expected during the night or when a high publication rate of new content is expected during a certain part of the day, the adaptation unit 14 may use the information provided in the database to adapt the transfer mechanism accordingly.

Furthermore, an interface 16 is provided via which information about a network load or about costs occurring in relation with the transmission may be received. Via the interface 16 the network provider or the content provider can influence the transmission mode adaptation by providing the information how much a SMS in the case of a push mechanism costs for the different times of the day.

The client 20 comprises a receiver (not shown) receiving the instructions and a transmission mode adaptation unit (not shown) adapting the transmission mode using the instructions received from network node 10.

In the example shown in Fig. 1 the different units are shown as separate units carrying out different steps of the invention. However, it should be understood that these units need not to be incorporated as separate units, it is also possible that some of the units described in Fig. 1 are incorporated in one or several units. By way of example the monitoring unit, the database and the adaptation unit may be incorporated into the push gateway. Furthermore, the units may be incorporated using hardware or software. In one example of the invention the decision logic including the units 13 to 16 may be incorporated into the push gateway 12.

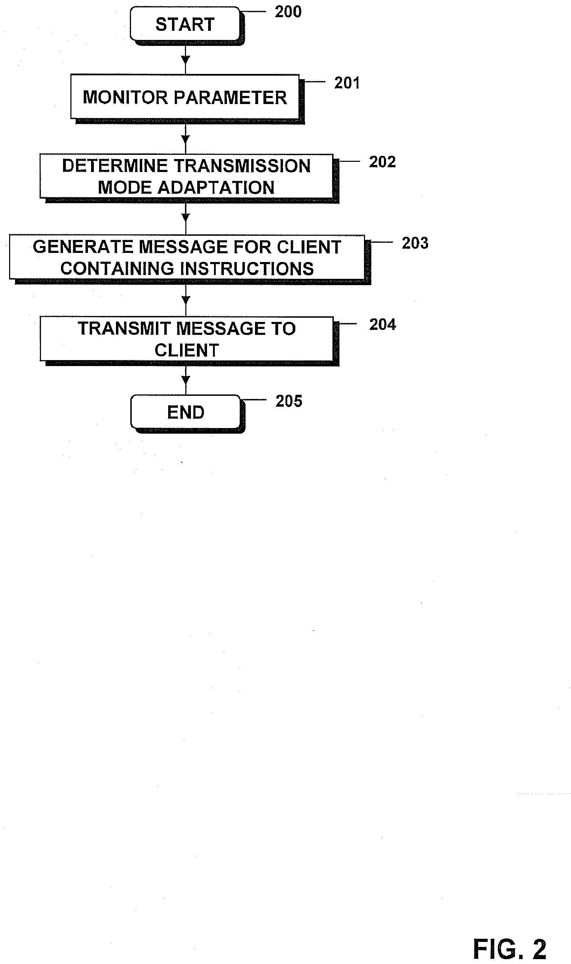

In Fig. 2 the main steps for adapting a transmission mode for a content transmission are summarized. After the start of the method in step 200 and after the client has registered to the network node, e.g. the push gateway, the client can begin to poll the content source for updates. All requests sent from the client to the content source or content server go via the network node 10, e.g. the traffic proxy 11.

In step 201 the parameter related to content transmission or the different parameters are monitored and the transmission mode adaptation is determined taking into account the monitored parameter or parameters (step 202). In the next step 203 a message is generated for the client containing the instructions how to adapt the transmission mode and in step 204 the message is transmitted to the client where the instructions can be followed before the method ends in step 205. In the following the transmission mode adaptation is explained in more detail.

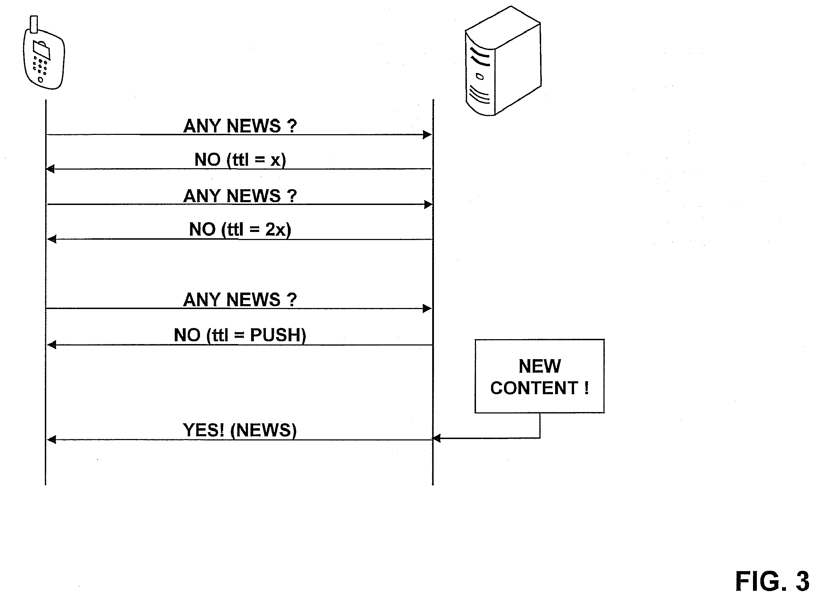

In connection with Fig. 3 an embodiment is disclosed in which, at the beginning, the transmission mode is selected in such a way that the client polls for new content at a predetermined polling frequency. A push gateway/the monitoring unit may then monitor the success rate of client polls for each content source. In the example shown the client asks for a first time whether there are any news in connection with the subscribed content. The content server then responds that no news are available. The client then asks for a second time depending on the used polling frequency whether there are any news. In the embodiment shown the push gateway may then inform that no news are available and that the client should decrease the polling frequency. As a consequence, the client waits for a longer time for a new polling attempt. If there are still no news for the client, it may be decided that the client should not poll for updates anymore until further notice. Instead the server informs the client that no new content is available and that new content will be delivered using, e.g. a SMS push or any other push delivery mechanism. In the SMS push mode the client may even shut down relying on the server to wake it up once new content is available. Once new content is detected at the server, the client will be informed that new content is available on the server.

As can be seen from the example above, the push gateway may monitor the success rate of client polls for each content source. In the event of a negative poll or consecutive negative polls, the push gateway may modify the returned content to tell the client to decrease its polling frequency. For example, if the client is requesting a RSS feed, the time to life (TTL) element may be modified to indicate that the client should wait longer before issuing the next update. Other proprietary protocols may be used by the server to communicate the need to increase the polling frequency. In another example in the case of a successful poll the push gateway may choose to decrease the polling interval.

Even though SMS push delivery is a very efficient form of content delivery in mobile networks, it has a cost associated and may therefore not be used as default delivery method. The push gateway needs to send a SMS for each new delivery of content. In the event of the content source being updated frequently while still in the push delivery mode, the push gateway may chose to cache and group together a number of push notifications to save SMS charges.

Furthermore, it is possible that the push gateway is configured in such a way that it does not necessarily have to push the new content as soon as it is available. The push gateway may instead wait for an appropriate time or even aggregate a number of updated from different content sources before issuing the push delivery.

In an analogous way the push gateway may also instruct the client to switch back to the polling mode when the costs for the push SMS are higher than the polling traffic. This will be the case when it is detected via the monitored input parameters that the content is more often published at the content source, meaning that the polling events would often be successful or when the network load is very low and the polling traffic would be acceptable. The instructions to switch back to poll mode could be implemented in a special push SMS that is sent to the client.

In another example the adaptation unit/push gateway may also instruct the client to switch directly to push mode without a reduction of the polling frequency. This is especially helpful if the network node has a certain level of knowledge on the content source characteristics, e.g. a specific source never sends out content between 6 p.m. and 7 a.m. In this example the client may be instructed to switch to the push mode at 6 p.m. This information may be stored in the database shown in Fig. 1 as disclosed above.

The network node may have various interfaces to other nodes in order to receive or request the input parameters needed for the decision logic provided in the adaptation unit 14. By way of example an interface to an operation and maintenance center of the network operator may be provided to configure cost values and to monitor the current network load. The adaptation unit can calculated the estimated cost of keeping clients polling and can compare it to the SMS costs associated with the push delivery. The cost calculation for polling clients is done using the monitored volume of poling traffic weighted with cost per bits that can be defined e.g. by an operator. Some of the factors that also go into the decision logic may be the SMS cost, polling success rate, average content source update frequency, current network usage, urgency of content, etc. Furthermore, it is assumed that the network usage and thus its relative utilization cost varies over time.

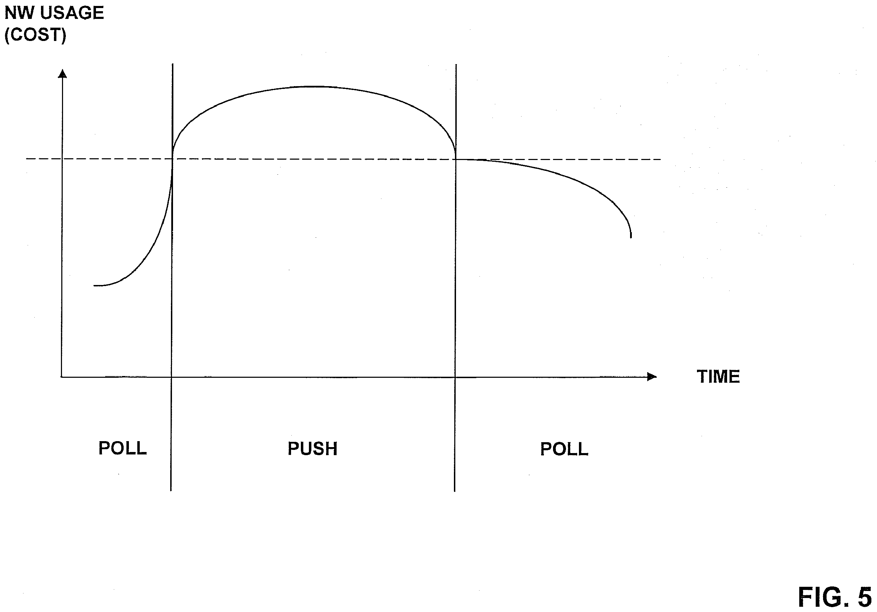

One example is shown in Fig. 5. In the first time period the network usage and the associated costs caused by polling is rather low, especially lower than the SMS costs shown in a dotted line for the push events. In a second phase the general network load is higher as well as the costs for the polling traffic. Therefore, the adaptation unit instructs the client to switch to the cheaper push mode. At a later point in time the load decreases and the transmission mode is set back to the poll mode. Users of a push-enabled application may optionally influence the decision in the network node by adjusting settings in the application. In that way the user can adjust the push behavior to suit its specific needs.

The above-described invention can help to improve a battery lifetime of the client 20. The decision logic provided in the network node 10 may therefore take battery optimization factors into consideration. Users that see battery consumption as a crucial factor may favor push delivery. The push notification mechanism can also be extended to incorporate mobile broadcast delivery systems, such as MBMS (Multimedia Broadcast Multicast Service). Below an exemplary cost calculation is shown. By way of example the costs for operation in the SMS push $c_{ModeSMS}(\Delta t)$ may be compared to the costs of the operation in the poll mode $c_{ModePoll}(\Delta t)$ and if the costs for the SMS push mode are higher than the costs for the poll mode, the client is instructed to switch to the poll mode if it is not the current operating mode. Otherwise, the client is instructed to switch to SMS push mode if it is not the current operating mode. An example of a cost calculation is given in the formula below.

$$c_{ModeSMS}(\Delta t) = \sum_{i=0}^{n} f_{SourceUpdate(i)}(\Delta t) \cdot \Delta t \cdot c_{SMS}$$

$$c_{ModePoll}(\Delta t) = \sum_{i=0}^{n} \left[ f_{FailedPoll(i)}(\Delta t) \cdot V_{source(i)} \right] \cdot \Delta t \cdot c_{Data}(\Delta t)$$

where $f_{FailedPoll(i)}(\Delta t)$ is the frequency of failed poll attempts at a certain feed source in a defined timeframe $\Delta t$ and $f_{SourceUpdate(i)}(\Delta t)$ is the update frequency of a feed source in a time frame. These two values may be obtained using measurement or estimations results, or they could also be obtained using heuristic mechanisms. $c_{SMS}$ denotes the cost of an operator for sending a SMS in the operators own network and $c_{Data}(\Delta t)$ are the costs per bit using convenient data transmission in the operator's network, $V_{source(i)}$ is the volume of data in case of a negative polling event.

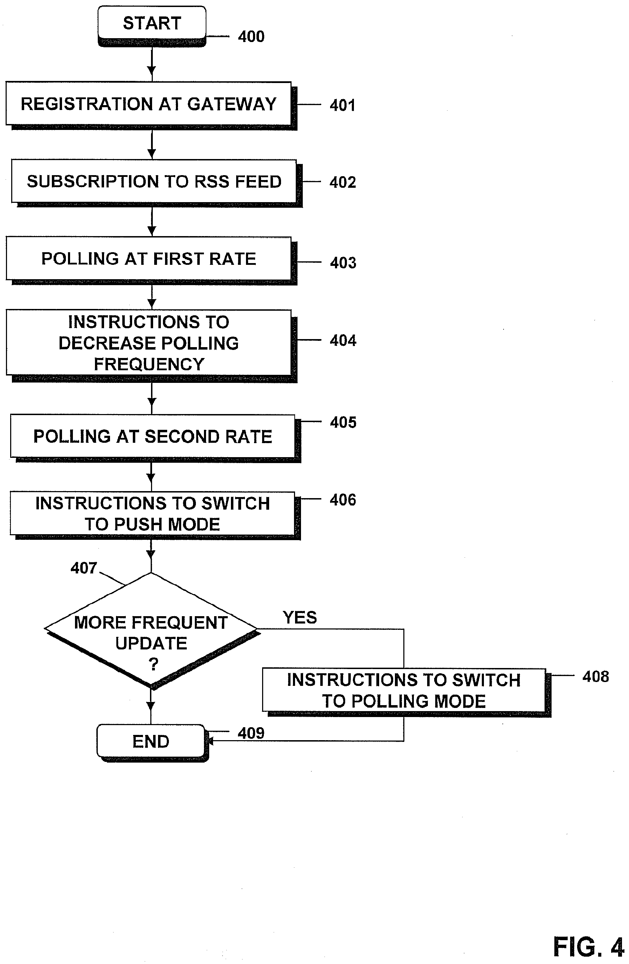

In connection with Fig. 4 an example is shown in which a client registers receiving content from a RSS (Real-Simple Syndication) source. The method starts in step 400. In step 401 the RSS client registers at the network node, e. g. at the push gateway and necessary information for the push delivery is relayed, e.g. MSISDN, application port number, etc.

In step 402 the RSS push client subscribes to a RSS feed from any content provider provided in the internet proxied by the push gateway. Subscription information is stored in the push gateway. In step 403 the RSS push client starts to request updated from the content source at a first rate, e.g. every 15 minutes. Since the traffic is proxied through the push gateway, the push gateway monitors the success rate of the polling attempts.

After a predetermined number of consecutive failed polling attempts the push gateway tells the client to decrease its polling frequency, e.g. to every 30 minute, e.g. by modifying the TTL element in the response (step 404). The client then continues to poll at a second rate and the negative polling attempts continue (step 405). It is then decided, e.g. in the push gateway, that the client should switch to push mode. At the next negative polling attempt the push gateway informs the client that it should stop polling and that it should switch to the push mode (step 406). The push gateway now starts to monitor the feed at the selected content provider for updates. Once the feed is updated, the push gateway notifies all clients that subscribe to the selected content provider feed via push. The subscribing RSS client downloads the new content and optionally shuts down. The selected content provider is continuously monitored by the push gateway which eventually notices that the feed is updated more frequently. It can be determined in step 407 whether the update frequency is more often than a predetermined threshold frequency. If this is the case, the push gateway may decide to fall back on polling instead of push and informs the client to start polling including the polling frequency (step 408). Since the clients may not be running, the updated instructions are relayed via a push mechanism. If the update frequency is not higher than the threshold frequency, it can be determined to stay in the push delivery mode before the method ends in step 409. When the client stays in the polling mode in step 408, the client starts to poll at a given rate as described in connection with step 403 and 405. Additionally, when the client stays in the push mode in step 407, the system can go back to step 407 continuously asking whether the update frequency changes. If this is confirmed, step 408 follows, if not, the content update frequency can be further monitored.

Summarizing, the invention provides a possibility to reduce network usage in a cost-effective manner. Furthermore, it is advantageous that the battery resources in the client may be saved. Frequent polling of the infrequently updated content resources is replaced by push delivery procedures.

### Claims

1.   A method for adapting, by a network node, a transmission mode for transmitting a content from a content server (30) to a client (20), the network node comprising a database containing information about a content publication rate when new content appears at the content server (30) on which the content is provided, the method comprising the steps of:

- monitoring at least one parameter related to content transmission, wherein monitoring said at least one parameter related to content transmission comprises monitoring a success rate of at least one polling attempt of the client (20) for retrieving the content from the content server (30),
- determining a transmission mode adaptation based on said at least one monitored parameter related to content transmission, the transmission mode adaptation being determined taking into account the monitored success rate of the at least one polling attempt of the client (20), and
- instructing the client (20) how to adapt the transmission mode based on the determined transmission mode adaptation,

wherein the transmission mode adaptation comprises adjusting a polling frequency of the client (20) from a first rate to a second rate based on the monitored success rate of the at least one polling attempt of the client (20),
wherein adjusting the polling frequency of the client (20) comprises, after a predetermined number of consecutive polling attempts with the polling frequency of the client (20) equal to the first rate are monitored to be negative polling attempts, adjusting (405) the polling frequency of the client (20) to the second rate, and
wherein the transmission mode adaptation further comprises, after a predetermined number of consecutive polling attempts with the polling frequency of the client (20) equal to the second rate are monitored to be negative polling attempts, switching (406) to a push transmission mode.

2.   The method according to claim 1, further comprising monitoring the content publication rate.

3.   The method according to any of the preceding claims, wherein the step of determining the transmission mode adaptation comprises a step of initiating a change from one transmission mode to another transmission mode based on said at least one monitored parameter related to content transmission.

4.   The method according to claim 1, wherein the step of determining the transmission mode adaptation comprises the step of initiating an adaptation of a poll mechanism of the client (20) based on said at least one monitored parameter related to content transmission.

5. The method according to any of the preceding claims, wherein the step of monitoring said at least one parameter related to content transmission further comprises the step of monitoring a content publication rate when the new content appears at the content server (30) on which the content is provided, and wherein the transmission mode adaptation is determined taking into account the monitored content publication rate.

6. The method according to any of the preceding claims, wherein the step of monitoring said at least one parameter related to content transmission further comprises the step of determining a network load parameter representing a network load of a network via which the content is transmitted to the client (20), and wherein the transmission mode adaptation is determined taking into account the network load parameter.

7. The method according to claim 2, further comprising switching (407, 408) to a poll mode for content transmission when the content publication rate is greater than a predetermined threshold frequency.

8. The method according to any of the preceding claims, wherein the step of monitoring said at least one parameter related to content transmission comprises the step of determining network costs for transmitting the content to the client (20) using the poll mode and costs for transmitting the content to the client (20) using a push mode, wherein the transmission mode of the content is selected based on a comparison of the involved costs.

9. The method according to any of claims 6 to 8, further comprising the step of determining whether the network load is lower than a predetermined threshold, wherein, in the affirmative, the transmission mode adaptation contains the step of selecting, for the client (20), the poll mode for content transmission.

10. The method according to any of claims 6 to 9, further comprising the step of determining whether a network load is higher than a predetermined threshold, wherein, in the affirmative, the transmission mode adaptation contains the step of selecting, for the client (20), the push mode for content transmission.

11. A network node (10) adapting a transmission mode for transmitting a content from a content server (30) to a client (20), the network node (10) comprising:

   - a monitoring unit (13) monitoring said at least one parameter related to content transmission, wherein the monitoring unit (13) is configured to monitor a success rate of at least one polling attempt of the client (20) for retrieving the content from the content server (30),
   - a transmission mode adaptation unit (14) determining a transmission mode adaptation based on the at least one monitored parameter related to content transmission and instructing the client (20) how to adapt the transmission mode based on the determined transmission mode adaptation, and
   - a database (15) containing information about the success rate of the at least one polling attempt of the client (20), wherein the transmission mode adaptation unit (14) is configured to determine the transmission mode adaptation by taking into account the monitored success rate of the at least one polling attempt of the client (20),

   wherein the transmission mode adaption comprises adjusting a polling frequency of the client (20) from a first rate to a second rate based on the monitored success rate of the at least one polling attempt of the client (20),
   wherein adjusting the polling frequency of the client (20) comprises, after a predetermined number of consecutive polling attempts with the polling frequency of the client (20) equal to the first rate are monitored to be negative polling attempts, adjusting the polling frequency of the client (20) to the second rate, and wherein the transmission mode adaptation further comprises, after a predetermined number of consecutive polling attempts with the polling frequency of the client (20) equal to the second rate are monitored to be negative polling attempts, switching to a push transmission mode.

12. The network node according to claim 11, further comprising an interface (16) allowing to determine information about a network load of a network via which the content is transmitted to the client (20).

13. The network node according to claim 11 or 12, further comprising an interface (16) allowing to determine information about costs occurring when the content is transmitted to the client (20) using a push or a poll mode.

**Patentansprüche**

1. Verfahren zum Adaptieren eines Übertragungsmodus durch einen Netzknoten zum Übertragen eines Inhalts von einem Inhaltsserver (30) zu einem Client (20), wobei der Netzknoten eine Datenbank umfasst, die Informationen über eine Inhaltsveröffentlichungsrate enthält, wenn neuer Inhalt an dem Inhaltsserver (30) erscheint, auf dem der Inhalt bereitgestellt wird, wobei das Verfahren die folgenden Schritte umfasst:

- Überwachen von zumindest einem Parameter in Bezug auf die Inhaltsübertragung, wobei das Überwachen von dem zumindest einem Parameter in Bezug auf die Inhaltsübertragung das Überwachen einer Erfolgsrate von zumindest einem Abfrageversuch des Clients (20), um den Inhalt von dem Inhaltsserver (30) abzurufen, umfasst,
- Bestimmen einer Übertragungsmodusanpassung basierend auf dem zumindest einen überwachten Parameter in Bezug auf die Inhaltsübertragung, wobei die Übertragungsmodusanpassung unter Berücksichtigung der überwachten Erfolgsrate des zumindest einen Abfrageversuchs des Clients (20) bestimmt wird, und
- Anweisen des Clients (20), wie der Übertragungsmodus basierend auf der ermittelten Übertragungsmodusanpassung angepasst wird,

wobei die Übertragungsmodusanpassung das Einstellen einer Abfragefrequenz des Clients (20) von einer ersten Rate auf eine zweite Rate basierend auf der überwachten Erfolgsrate des mindestens einen Abfrageversuchs des Clients (20) umfasst,
wobei das Einstellen einer Abfragefrequenz des Clients (20) umfasst, nachdem eine vorbestimmte Anzahl von aufeinanderfolgenden Abfrageversuchen mit der Abfragefrequenz des Clients
(20) gleich der ersten Rate als negative Abfrageversuche überwacht werden, Einstellen (405) der Abfragefrequenz des Clients (20) auf die zweite Rate, und
wobei die Übertragungsmodusanpassung ferner umfasst, nachdem eine vorbestimmte
Anzahl von aufeinanderfolgenden Abfrageversuchen mit der Abfragefrequenz des Clients (20) gleich der zweiten Rate als negative Abfrageversuche überwacht werden, Umschalten (406) zu einem Push-Übertragungsmodus.

2. Verfahren nach Anspruch 1, das ferner das Überwachen der Inhaltsveröffentlichungsrate umfasst.

3. Verfahren nach einem der vorstehenden Ansprüche, wobei der Schritt des Bestimmens der Übertragungsmodusanpassung einen Schritt des Veranlassens eines Wechsels von einem Übertragungsmodus zu einem anderen Übertragungsmodus basierend auf dem zumindest einem überwachten Parameter in Bezug auf die Inhaltsübertragung umfasst.

4. Verfahren nach Anspruch 1, wobei der Schritt des Bestimmens der Übertragungsmodusanpassung den Schritt des Veranlassens einer Anpassung von einem Abfragemechanismus des Clients (20) basierend auf dem zumindest einem überwachten Parameter in Bezug auf die Inhaltsübertragung umfasst.

5. Verfahren nach einem der vorstehenden Ansprüche, wobei der Schritt des Überwachens des zumindest einen Parameters in Bezug auf die Inhaltsübertragung ferner den Schritt des Überwachens einer Inhaltsveröffentlichungsrate umfasst, wenn der neue Inhalt an dem Inhaltsserver (30) erscheint, auf welchem der Inhalt bereitgestellt wird, und wobei die Übertragungsmodusanpassung unter Berücksichtigung der überwachten Inhaltsveröffentlichungsrate bestimmt wird.

6. Verfahren nach einem der vorstehenden Ansprüche, wobei der Schritt des Überwachens des zumindest einen Parameters in Bezug auf die Inhaltsübertragung ferner den Schritt des Bestimmens eines Netzlastparameters umfasst, der die Netzlast eines Netzes repräsentiert, über welches der Inhalt an den Client (20) übertragen wird, und wobei die Übertragungsmodusanpassung unter Berücksichtigung des Netzlastparameters bestimmt wird.

7. Verfahren nach Anspruch 2, ferner umfassend Umschalten (407, 408) zu einem Abfragemodus für Inhaltsübertragung, wenn die Inhaltsveröffentlichungsrate größer als eine vorbestimmte Schwellenfrequenz ist.

8. Verfahren nach einem der vorstehenden Ansprüche, wobei der Schritt des Überwachens des zumindest einen Parameters in Bezug auf die Inhaltsübertragung den Schritt des Bestimmens von Netzkosten für die Übertragung des Inhalts zum Client (20) unter Verwendung des Abfragemodus und Kosten für die Übertragung des Inhalts zum Client (20) unter Verwendung eines Push-Modus umfasst, wobei der Übertragungsmodus des Inhalts basierend auf einem Vergleich der beteiligten Kosten ausgewählt wird.

9. Verfahren nach einem der Ansprüche 6 bis 8, ferner umfassend den Schritt des Bestimmens, ob die Netzlast niedriger als ein vorbestimmter Schwellenwert, wobei, zustimmend, die Übertragungsmodusanpassung den Schritt des Auswählens des Abfragemodus für die Inhaltsübertragung für den Client (20) enthält.

10. Verfahren nach einem der Ansprüche 6 bis 9, ferner umfassend den Schritt des Bestimmens, ob eine Netzlast höher als ein vorbestimmter Schwellenwert, wobei, zustimmend, die Übertragungsmodusanpassung den Schritt des Auswählens des Push-Modus für die Inhaltsübertragung für den Client (20) enthält.

11. Netzknoten (10), der einen Übertragungsmodus zum Übertragen eines Inhalts von einem Inhaltsserver (30) zu einem Client (20) anpasst, wobei der Netzknoten (10) Folgendes umfasst:

   - eine Überwachungseinheit (13), die den zumindest einen Parameter in Bezug auf die Inhaltsübertragung überwacht, wobei die Überwachungseinheit (13) konfiguriert ist, um eine Erfolgsrate von zumindest einem Abfrageversuch des Clients (20) zum Abrufen des Inhalts von dem Inhaltsserver (30) zu überwachen,
   - eine Übertragungsmodusanpassungseinheit (14), die eine Übertragungsmodusanpassung basierend auf dem zumindest einem überwachten Parameter in Bezug auf die Inhaltsübertragung bestimmt und den Client (20) anweist, wie der Übertragungsmodus basierend auf der ermittelten Übertragungsmodusanpassung angepasst wird, und
   - eine Datenbank (15), die Information über die Erfolgsrate von dem zumindest einem Abfrageversuch des Clients (20) enthält, wobei die Übertragungsmodusanpassungseinheit (14) konfiguriert ist, um die Übertragungsmodusanpassung unter Berücksichtigung der überwachten Erfolgsrate des zumindest einen Abfrageversuchs des Clients (20) zu bestimmen,

   wobei die Übertragungsmodusanpassung das Einstellen einer Abfragefrequenz des Clients (20) von einer ersten Rate auf eine zweite Rate basierend auf der überwachten Erfolgsrate des mindestens einen Abfrageversuchs des Clients (20) umfasst,
   wobei das Einstellen einer Abfragefrequenz des Clients (20) umfasst, nachdem eine vorbestimmte Anzahl von aufeinanderfolgenden Abfrageversuchen mit der Abfragefrequenz des Clients (20) gleich der ersten Rate als negative Abfrageversuche überwacht werden, Einstellen der Abfragefrequenz des Clients (20) auf die zweite Rate, und wobei die Übertragungsmodusanpassung ferner umfasst, nachdem eine vorbestimmte Anzahl von aufeinanderfolgenden Abfrageversuchen mit der Abfragefrequenz des Clients (20) gleich der zweiten Rate als negative Abfrageversuche überwacht werden, Umschalten zu einem Push-Übertragungsmodus.

12. Netzknoten nach Anspruch 11, ferner umfassend eine Schnittstelle (16), die ermöglicht, Informationen über eine Netzlast eines Netzes zu bestimmen, über die der Inhalt an den Client (20) übertragen wird.

13. Netzknoten nach Anspruch 11 oder 12, ferner umfassend eine Schnittstelle (16), die ermöglicht, Informationen über anfallende Kosten zu bestimmen, wenn der Inhalt an den Client (20) unter Verwendung eines Push- oder eines Abfragemodus übertragen wird.

## Revendications

1. Procédé d'adaptation, par un noeud de réseau, d'un mode de transmission pour transmettre un contenu d'un serveur de contenu (30) à un client (20), le noeud de réseau comprenant une base de données contenant des informations sur un taux de publication de contenu lorsqu'un nouveau contenu apparaît sur le serveur de contenu (30) sur lequel le contenu est fourni, le procédé comprenant les étapes suivantes :

   - la surveillance d'au moins un paramètre lié à la transmission de contenu, la surveillance dudit au moins un paramètre lié à la transmission de contenu comprenant la surveillance d'un taux de réussite d'au moins une tentative d'interrogation du client (20) pour extraire le contenu du serveur de contenu (30),
   - la détermination d'une adaptation de mode de transmission sur la base dudit au moins un paramètre surveillé lié à la transmission de contenu, l'adaptation de mode de transmission étant déterminée en tenant compte du taux de réussite surveillé de l'au moins une tentative d'interrogation du client (20), et
   - le fait d'indiquer au client (20) comment adapter le mode de transmission sur la base de l'adaptation de mode de transmission déterminée,

dans lequel l'adaptation de mode de transmission comprend l'ajustement d'une fréquence d'interrogation du client (20) d'un premier taux à un second taux sur la base du taux de réussite surveillé de l'au moins une tentative d'interrogation du client (20),

dans lequel l'ajustement de la fréquence d'interrogation du client (20) comprend, une fois qu'un nombre prédéterminé de tentatives d'interrogation consécutives avec la fréquence d'interrogation du client (20) égal au premier taux sont surveillées pour être des tentatives d'interrogation négatives, l'ajustement (405) de la fréquence d'interrogation du client (20) au second taux, et

dans lequel l'adaptation de mode de transmission comprend en outre, une fois qu'un nombre prédéterminé de tentatives d'interrogation consécutives avec la fréquence d'interrogation du client (20) égal au second taux sont surveillées pour être des tentatives d'interrogation négatives, la commutation (406) à un mode de transmission push.

2. Procédé selon la revendication 1, comprenant en outre la surveillance du taux de publication de contenu.

3. Procédé selon l'une quelconque des revendications précédentes, dans lequel l'étape de détermination de l'adaptation de mode de transmission comprend une étape d'initiation d'un changement d'un mode de transmission à un autre mode de transmission sur la base dudit au moins un paramètre surveillé lié à la transmission de contenu.

4. Procédé selon la revendication 1, dans lequel l'étape de détermination de l'adaptation de mode de transmission comprend l'étape d'initiation d'une adaptation d'un mécanisme d'interrogation du client (20) sur la base dudit au moins un paramètre surveillé lié à la transmission de contenu.

5. Procédé selon l'une quelconque des revendications précédentes, dans lequel l'étape de surveillance dudit au moins un paramètre lié à la transmission de contenu comprend en outre l'étape de surveillance d'un taux de publication de contenu lorsque le nouveau contenu apparaît sur le serveur de contenu (30) sur lequel le contenu est fourni, et l'adaptation de mode de transmission étant déterminée en tenant compte du taux de publication de contenu surveillé.

6. Procédé selon l'une quelconque des revendications précédentes, dans lequel l'étape de surveillance dudit au moins un paramètre lié à la transmission de contenu comprend en outre l'étape de détermination d'un paramètre de charge réseau représentant une charge réseau d'un réseau à travers lequel le contenu est transmis au client (20), et l'adaptation de mode de transmission étant déterminée en tenant compte du paramètre de charge réseau.

7. Procédé selon la revendication 2, comprenant en outre la commutation (407, 408) à un mode d'interrogation pour la transmission de contenu lorsque le taux de publication de contenu est supérieur à une fréquence seuil prédéterminée.

8. Procédé selon l'une quelconque des revendications précédentes, dans lequel l'étape de surveillance dudit au moins un paramètre lié à la transmission de contenu comprend l'étape de détermination des coûts de réseau pour transmettre le contenu au client (20) à l'aide du mode d'interrogation et des coûts pour transmettre le contenu au client (20) à l'aide d'un mode push, le mode de transmission du contenu étant sélectionné sur la base d'une comparaison des coûts impliqués.

9. Procédé selon l'une quelconque des revendications 6 à 8, comprenant en outre l'étape consistant à déterminer si la charge réseau est inférieure à un seuil prédéterminé, dans lequel, dans l'affirmative, l'adaptation de mode de transmission contient l'étape de sélection, pour le client (20), du mode d'interrogation pour la transmission de contenu.

10. Procédé selon l'une quelconque des revendications 6 à 9, comprenant en outre l'étape consistant à déterminer si une charge réseau est supérieure à un seuil prédéterminé, dans lequel, dans l'affirmative, l'adaptation de mode de transmission contient l'étape de sélection, pour le client (20), du mode push pour la transmission de contenu.

11. Noeud de réseau (10) adaptant un mode de transmission pour transmettre un contenu d'un serveur de contenu (30) à un client (20), le noeud de réseau (10) comprenant :

- une unité de surveillance (13) surveillant ledit au moins un paramètre lié à la transmission de contenu, l'unité de surveillance (13) étant conçue pour surveiller un taux de réussite d'au moins une tentative d'interrogation du client (20) pour extraire le contenu du serveur de contenu (30),

- une unité d'adaptation de mode de transmission (14) déterminant une adaptation de mode de transmission sur la base de l'au moins un paramètre surveillé lié à la transmission de contenu et indiquant au client (20) comment adapter le mode de transmission sur la base de l'adaptation de mode de transmission déterminée, et
- une base de données (15) contenant des informations sur le taux de réussite de l'au moins une tentative d'interrogation du client (20), l'unité d'adaptation de mode de transmission (14) étant conçue pour déterminer l'adaptation de mode de transmission en tenant compte du taux de réussite surveillé de l'au moins une tentative d'interrogation du client (20),

dans lequel l'adaptation de mode de transmission comprend l'ajustement d'une fréquence d'interrogation du client (20) d'un premier taux à un second taux sur la base du taux de réussite surveillé de l'au moins une tentative d'interrogation du client (20),

dans lequel l'ajustement de la fréquence d'interrogation du client (20) comprend, une fois qu'un nombre prédéterminé de tentatives d'interrogation consécutives avec la fréquence d'interrogation du client (20) égal au premier taux sont surveillées pour être des tentatives d'interrogation négatives, l'ajustement de la fréquence du client (20) au second taux, et

dans lequel l'adaptation de mode de transmission comprend en outre, une fois qu'un nombre prédéterminé de tentatives d'interrogation consécutives avec la fréquence d'interrogation du client (20) égal au second taux sont surveillées pour être des tentatives d'interrogation négatives, la commutation à un mode de transmission push.

12. Noeud de réseau selon la revendication 11, comprenant en outre une interface (16) permettant de déterminer des informations sur une charge réseau d'un réseau à travers lequel le contenu est transmis au client (20).

13. Noeud de réseau selon la revendication 11 ou 12, comprenant en outre une interface (16) permettant de déterminer des informations sur les coûts se produisant lorsque le contenu est transmis au client (20) à l'aide d'un mode push ou d'interrogation.

FIG. 1

START — 200

↓

MONITOR PARAMETER — 201

↓

DETERMINE TRANSMISSION
MODE ADAPTATION — 202

↓

GENERATE MESSAGE FOR CLIENT
CONTAINING INSTRUCTIONS — 203

↓

TRANSMIT MESSAGE TO
CLIENT — 204

↓

END — 205

**FIG. 2**

ANY NEWS ?

NO (ttl = x)

ANY NEWS ?

NO (ttl = 2x)

ANY NEWS ?

NO (ttl = PUSH)

NEW
CONTENT !

YES! (NEWS)

FIG. 3

```
          ┌─────────────┐
          │    START    │──── 400
          └─────────────┘
                 │
                 ▼
   ┌─────────────────────────────┐
   │   REGISTRATION AT GATEWAY   │──── 401
   └─────────────────────────────┘
                 │
                 ▼
   ┌─────────────────────────────┐
   │   SUBSCRIPTION TO RSS FEED   │──── 402
   └─────────────────────────────┘
                 │
                 ▼
   ┌─────────────────────────────┐
   │    POLLING AT FIRST RATE    │──── 403
   └─────────────────────────────┘
                 │
                 ▼
   ┌─────────────────────────────┐
   │      INSTRUCTIONS TO        │
   │     DECREASE POLLING        │──── 404
   │        FREQUENCY            │
   └─────────────────────────────┘
                 │
                 ▼
   ┌─────────────────────────────┐──── 405
   │   POLLING AT SECOND RATE    │
   └─────────────────────────────┘
                 │
                 ▼
   ┌─────────────────────────────┐──── 406
   │   INSTRUCTIONS TO SWITCH    │
   │       TO PUSH MODE          │
   └─────────────────────────────┘
                 │
   407           ▼
         ◇─────────────────◇
         │  MORE FREQUENT  │      YES
         │     UPDATE      │─────────────┐
         │       ?         │             │
         ◇─────────────────◇   ┌──────────────────────────────┐──── 408
                 │             │   INSTRUCTIONS TO SWITCH     │
                 ▼             │      TO POLLING MODE         │
          ┌─────────────┐      └──────────────────────────────┘
          │     END     │◀──── 409         │
          └─────────────┘◀──────────────────┘
```

FIG. 4

NW USAGE
(COST)

POLL          PUSH          POLL

TIME

**FIG. 5**

EP 2 476 239 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1853044 A1
- US 2005041652 A
- US 6557026 B